**Europäisches Patentamt**

**European Patent Office**

**Office européen des brevets**

(19)

(11) Veröffentlichungsnummer : **0 493 314 A2**

(12) **EUROPÄISCHE PATENTANMELDUNG**

(21) Anmeldenummer : **91810922.4**

(22) Anmeldetag : **27.11.91**

(51) Int. Cl.⁵ : **G01N 1/28,** G01N 30/08

(30) Priorität : **20.12.90 CH 4065/90**

(43) Veröffentlichungstag der Anmeldung :
**01.07.92 Patentblatt 92/27**

(84) Benannte Vertragsstaaten :
**AT BE CH DE DK ES FR GB GR IT LI LU NL SE**

(71) Anmelder : **AIRMOTEC AG**
**Analytische Geräte, Länggstrasse 19**
**CH-8308 Illnau (CH)**

(72) Erfinder : **Behm, Felix, Dr.**
**Schulhausstrasse 12**
**CH-8600 Dübendorf (CH)**
Erfinder : **Streit, Peter**
**Seewadelstrasse 3**
**CH-8335 Hittnau (CH)**

(74) Vertreter : **Frauenknecht, Alois J. et al**
**c/o PPS Polyvalent Patent Service AG,**
**Mellingerstrasse 1**
**CH-5400 Baden (CH)**

(54) **Verfahren und Vorrichtung zum Anreichern von Proben für analytische Zwecke.**

(57) Zu analytischen Zwecken werden Proben aus strömenden Medien entnommen und aufbereitet. Insbesondere für quasi kontinuierliche Anwendungen wird ein Kapillarröhrchen verfahrensgemäss durch das zu analysierende Medium und anschliessend durch ein Konditionierungs- und/oder Trägergas durchströmt, während zur selben Zeit ein weiteres Röhrchen durch das zu analysierende Medium durchströmt wird. Eine Vorrichtung zur Durchführung dieses Verfahrens weist eine drehbare Trommel (1) mit mindestens zwei peripheren Ausnehmungen (6) zur Aufnahme von Röhrchen (2) auf, welche mit der Trommel (1) schrittweise zu entsprechenden Gasanschlüssen (4, 4') gedreht wird. Eine bevorzugte Verwendung der Vorrichtung liegt in der Chromatographie, insbesondere der Gaschromatographie

FIG.1

Jouve, 18, rue Saint-Denis, 75001 PARIS

Die vorliegende Erfindung bezieht sich auf ein Verfahren zum Anreichern von Proben für analytische Zwecke, die einem strömenden Medium entnommen werden und in wenigstens zwei mit wenigstens einem stationären Adsorbenten belegten Röhrchen angereichert werden sowie auf eine Vorrichtung zur Durchführung des Verfahrens.

Eine Vorrichtung zur Anreicherung von Gasproben mit mehreren Adsorbtionsröhrchen, die auf einem bandförmigen Träger nebeneinander befestigt sind, ist aus der EP -A2- 0 292 844 bekannt. Die Adsorbtionsröhrchen werden endseitig durch eine Membrane verschlossen und werden zur Probenaufnahme und zur Probenabgabe jeweils beidseitig durch eine nadelförmige Düse angestochen. Die Probenaufnahme und -abgabe erfolgt stationär im entsprechenden Gerät; der bandförmige Träger wird von einem Gerät zum andern verbracht und dort linear bewegt.

Nachteilig ist beim Bekannten die Notwendigkeit des gasdichten Verschlusses der Röhrchen; es resultiert eine aufwendige Gasführung, üblicherweise in zwei getrennt vorhandenen Geräten.

Es ist daher Aufgabe der Erfindung, ein Verfahren und eine Vorrichtung zu schaffen, die ermöglichen, die angereicherten Proben aus der Gasphase unmittelbar weiter zu verarbeiten. Die Vorrichtung soll einen quasi kontinuierlichen Analysebetrieb ermöglichen.

Diese Aufgabe wird verfahrensgemäss dadurch gelöst, dass in einem ersten Verfahrensschritt ein erstes Röhrchen durch das zu analysierende Medium durchströmt wird, dass in einem zweiten Schritt das Medium durch ein zweites Röhrchen durchgeleitet wird, währenddessen das erste Röhrchen durch ein Konditionierungs- und/oder Trägergas durchströmt wird.

Die erfindungsgemässe Vorrichtung weist eine drehbare Trommel mit mindestens zwei peripheren Ausnehmungen zur Aufnahme von Röhrchen auf.

Die erfindungsgemässe Lösung ermöglicht die Verwendung von endseitig offenen Kapillarröhrchen ohne Schutzhülse. Ein besonderer Vorteil ist dabei die Probenaufbereitung mittels verschiedener Prozessgase in ein und demselben Röhrchen, ohne dass dabei Gasanschlüsse gewechselt werden müssen.

Das Verfahren nach Anspruch 2 ermöglicht in einfacher Weise, einen Wasserüberschuss zu eliminieren und/oder selektierte Reaktionen zur Probenvorbereitung auszuführen.

Vorteilhafterweise werden die in den Ansprüchen 3 und 4 charakterisierten Strömungsrichtungen angewandt, da damit die Desorptionsfolge positiv beeinflusst wird.

Das Verfahren gemäss Anspruch 5 ermöglicht eine vollständige Desorption der Probe.

Der in Anspruch 6 dargestellte Ablauf erlaubt eine optimale Probenanreicherung.

Vorteilhaft ist das Verfahren nach Anspruch 7 durch die Einsparung von Kapillarröhrchen und aufwendigen Behandlungsschritten.

Die kreisförmige Führung der Röhrchen, entsprechend Anspruch 8, erlaubt ein zyklisches Verfahren auf engstem Raum.

Das Verfahren nach Anspruch 9 ergibt eine zusätzliche Einsparung von Kapillarröhrchen und eignet sich hervorragend für eine quasi/kontinuierliche Überwachung von strömenden Medien.

Die Ausgestaltung nach Anspruch 10 lässt sich besonders wirtschaftlich herstellen und für verschiedenartige analytische Zwecke einsetzen.

Die in Anspruch 11 erwähnten Ausnehmungen dienen der verbesserten Wärmeübertragung und erlauben kurze Desorptionszeiten.

Die Weiterbildung gemäss Anspruch 12 stellt eine optimierte Wärmeübertragung dar.

Die Vorrichtung gemäss Anspruch 13 lässt den Einsatz stationärer Gasanschlüsse zu und erlaubt zudem die Einführung metallischer Dichtungen und/oder anderen chemisch inerten Dichtmaterialien, die keine Kontaminationen entstehen lassen.

Die Verwendung nach Anspruch 14 sieht den bevorzugten Einsatz in Chromatographen beliebigen Typus vor und erlaubt, diese für eine stetige Überwachung von Gasen und Flüssigkeiten einzusetzen.

Anhand eines praktisch realisierten Ausführungsbeispiels wird der Erfindungsgegenstand näher erläutert. Es zeigen:

Fig. 1 Eine Vorrichtung zum Anreichern von Proben aus einer Gasphase im Längsschnitt und

Fig. 2 eine modifizierte Variante der Vorrichtung Fig. 1 im Querschnitt.

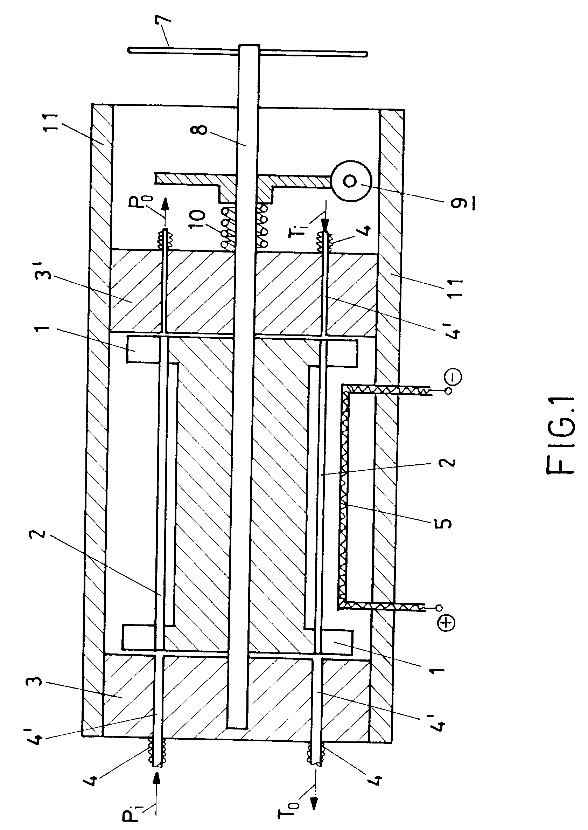

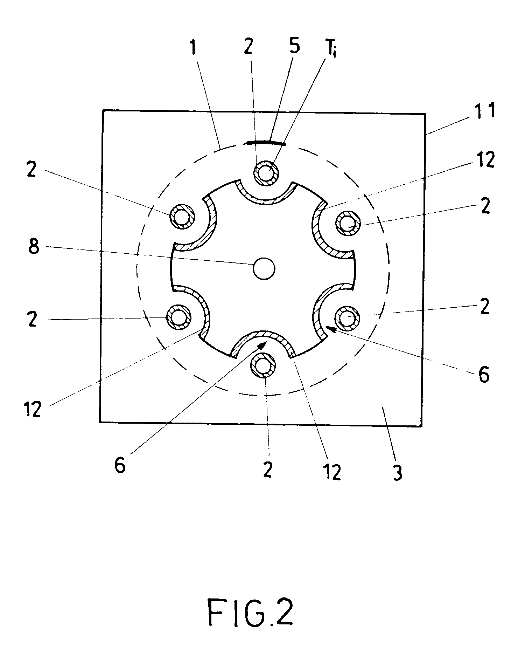

In Fig. 1 ist eine zylindrische Trommel 1 dargestellt. Diese weist auf ihrer ganzen Länge periphere Ausnehmungen 6, vgl. Fig. 2, auf. In den rillenartigen Ausnehmungen 6 sind vier Kapillarröhrchen 2 eingelegt. Die Trommel 1 ist um eine Rotationsachse 8, über einen Schrittmotor 9 und ein hier nicht dargestelltes Zahnrad in an sich bekannter Weise drehbar ausgestaltet. Ein Positionsdetektor 7 zeigt den jeweiligen Schaltschritt an. Im hier dargestellten Beispiel, mit vier Kapillarröhrchen, entspricht ein Schritt einer Drehung der Trommel um 90°.

Auf einer ihrer Stirnseiten ist die Trommel 1 auf einen Flansch 3 flächendichtend angepresst. Auf ihrer anderen Stirnseite wird ein ähnlicher Flansch 3′ mittels einer Druckfeder 10 angedrückt. Beide Flanschen 3, 3′ weisen Gasdurchführungen 4′ und Gasanschlüsse 4 auf. Die Gasdurchführungen 4′ sind auf die Öffnungen der Kapillarröhrchen 2 ausgerichtet, sodass jede Schrittdrehung der Trommel um 90° die Öffnung eines anderen Kapillarröhrchens zu einem bestimmten Gasdurchlass bringt. Die Strömungsrichtung des zu analysierenden Gases ist durch einen Pfeil dargestellt; der Probeneingang ist mit $P_i$, der Probenausgang mit $P_o$ bezeichnet. Die Strömungsrichtung des Trägergases T ist entsprechend in Gegenrichtung gezeichnet; $T_i$ ist der Trägergaseingang, $T_o$ ist der Trägergasausgang.

Ein Trockengas, vorzugsweise trockener Stickstoff, ist an einem weiteren, in Fig. 1 nicht dargestellten Gasanschluss angeschlossen. Oberhalb der Trommel 1, parallel zur peripheren Ausnehmung 6 positioniert gegenüber dem Trägergasanschluss, befindet sich eine Heizung 5 mit ihren elektrischen Anschlüssen + und -. Die gesamte Vorrichtung ist in ein Gehäuse 11 eingebaut.

Die Darstellung Fig. 2 zeigt eine Variante zu Fig. 1 mit sechs Kapillarröhrchen äquiradial in den peripheren Ausnehmungen 6 angeordnet. Zusätzlich sind hier metallische Reflektoren 12 in den Ausnehmungen 6 ersichtlich. Im weiteren ist hier die Positionierung der Heizung 5 oberhalb des Trägergaseingangs $T_i$ zu sehen. Die Heizung 5, eine elektrische Widerstandsheizung, erstreckt sich über den grössten Teil der Länge des Kapillarröhrchens 2.

Die Vorbereitung bzw. die Anreicherung der Proben in einer bevorzugten Anwendung für eine gaschromatographische Messung wird wie folgt durchgeführt:

Der Gasstrom der Probe wird an den Gasanschluss $P_i$ angeschlossen und durch das Kapillarröhrchen 2 durchgeleitet. Das Kapillarröhrchen 2 ist vorzugsweise mit Tenax (Handelsmarke der Firma Enka, Arnhem, NL) und/oder Carbosieve (Handelsmarke der Firma Supelco Inc., Bellefonte, PA, USA) als Adsorbent gefüllt. Für analytische Konzentrationen im Bereich von 1 bis 100 ppb wird das Probegas während 15 Minuten durch das Kapillarröhrchen durchgeleitet. Nach dieser vorgewählten Zeit dreht der Schrittmotor die Trommel um einen Winkel von 90° oder 60°, je nach Ausführungsform, Fig. 1 bzw. Fig. 2.

Anschliessend gelangt ein weiteres Röhrchen 2 in den Gasstrom. Das früher durchströmte Röhrchen 2 wird zur nächsten Position gedreht und mit Trockengas in gleicher Richtung durchströmt. Nach 5 Minuten wird die Trommel wiederum um 90° bzw. 60° gedreht. Ein drittes Kapillarröhrchen 2 wird mit dem Probegas durchströmt. Die bereits getrockneten Röhrchen kommen nach weiteren stufenweisen Umdrehungen der Trommel in die Stellung, wo sich die Heizung 5 befindet und der Trägergasstrom T angeschlossen ist. Gleichzeitig wird das Trägergas T, vorzugsweise Helium, in Gegenrichtung zur Probe- und Trockengasströmung durch das Röhrchen geleitet und die Heizung 5 wieder aktiviert. Die Probe wird nun vom an sich bekannten Adsorbenten desorbiert und verlässt das Röhrchen in Richtung $T_o$ und wird in einer weiteren analytischen Vorrichtung, einer hier nicht dargestellten Kühlfalle oder einer Gaschromatographiekolonne, weiter behandelt.

Auf diese Weise wird eine quasi kontinuierliche Analyse eines kontinuierlich strömenden Probegases möglich.

Die erfindungsgemässe Vorrichtung lässt sich sehr einfach an verschiedene Applikationen anpassen, durch Auswechseln der Kapillarröhrchen und/oder durch deren unterschiedliche Belegung mit verschiedenen Adsorbenten.

Als besonders geeignet erscheint der Erfindungsgegenstand zur Probenaufbereitung unter reduzierter Temperatur, beispielsweise in Gaschromatographen, die für die Luft- und Spurenanalytik eingesetzt sind.

## Patentansprüche

1. Verfahren zum Anreichern von Proben für analytische Zwecke, die einem strömenden Medium entnommen werden und in wenigstens zwei mit wenigstens einem stationären Adsorbenten belegten Röhrchen angereichert werden, dadurch gekennzeichnet, dass in einem ersten Verfahrensschritt ein erstes Röhrchen durch das zu analysierende Medium durchströmt wird, dass in einem zweiten Schritt das Medium durch ein zweites Röhrchen durchgeleitet wird, währenddessen das erste Röhrchen durch ein Konditionierungs- und/oder Trägergas durchströmt wird.

2. Verfahren zum Anreichern von Proben nach Anspruch 1, dadurch gekennzeichnet, dass das Konditionierungsgas ein Trocknungsgas ist.

3. Verfahren zum Anreichern von Proben nach Anspruch 1 oder 2, dadurch gekennzeichnet, dass das strömende Medium und das Konditionierungs- bzw. Trocknungsgas in gleicher Richtung durch das Röhrchen strömen.

4. Verfahren zum Anreichern von Proben nach Anspruch 3, dadurch gekennzeichnet, dass in einem weiteren Verfahrensschritt ein Trägergas durch das konditionierte Röhrchen in Gegenrichtung zu den vorgängig durchgeleitenden Gasen geführt wird.

5. Verfahren zum Anreichern von Proben nach Anspruch 4, dadurch gekennzeichnet, dass das vom Trägergas durchströmte Röhrchen beheizt wird, wobei die angereicherte Probe vom stationären Adsorbenten desorbiert wird.

6. Verfahren zum Anreichern von Proben nach Anspruch 5, dadurch gekennzeichnet, dass das Trägergas zusammen mit der desorbierten Probe in eine Analysevorrichtung geleitet wird.

7. Verfahren zum Anreichern von Proben nach Anspruch 1, dadurch gekennzeichnet, dass die Adsorption aus dem strömenden Medium, die Konditionierung und die Desorption hintereinander, in ein und demselben Röhrchen durchgeführt werden.

8. Verfahren zum Anreichern von Proben nach Anspruch 7, dadurch gekennzeichnet, dass das Röhrchen kreisförmig und mit gleichem Zentriwinkel schrittweise bewegt wird, wobeinach jedem Schritt ein physikalisch/chemischer Verfahrensschritt ausgeführt wird.

9. Verfahren zum Anreichern von Proben nach Anspruch 8, dadurch gekennzeichnet, dass das Röhrchen nach Desorption der Probe in einer nächsten Stufe der erneuten Adsorption der Probe aus dem strömenden Medium zugeführt wird.

10. Vorrichtung zur Durchführung des Verfahrens zum Anreichern von Proben nach Anspruch 1, dadurch gekennzeichnet, dass eine drehbare Trommel (1) mindestens zwei peripheren Ausnehmungen (6) zur Aufnahme von Röhrchen (2) aufweist.

11. Vorrichtung zur Durchführung des Verfahrens zum Anreichern von Proben nach Anspruch 10, dadurch gekennzeichnet, dass im Bereich der Ausnehmungen (6) eine Wärmequelle (5) vorgesehen ist.

12. Vorrichtung zur Durchführung des Verfahrens zum Anreichern von Proben nach Anspruch 10, dadurch gekennzeichnet, dass in den peripheren Ausnehmungen (6) Reflektoren (12) vorgesehen sind.

13. Vorrichtung zur Durchführung des Verfahrens zum Anreichern von Proben nach Anspruch 10, dadurch gekennzeichnet, dass an den beiden Stirnseiten der Trommel (1) je ein Flansch (3, 3′) mit Gasdurchführungen (4′) dicht anliegt.

14. Verwendung der Vorrichtung nach einem der Ansprüche 10 bis 13 zur Chromatographie, insbesondere Gaschromatographie.

FIG.1

EP 0 493 314 A2

FIG.2